# FASCICULE DE BREVET EUROPEEN

(11) **EP 0 717 017 B1**
(45) Date de publication et mention de la délivrance du brevet: **04.08.1999**
(21) Numéro de dépôt: 95118682.4
(22) Date de dépôt: 28.11.1995
(51) Int. Cl.: C04B 35/486, C04B 35/64, C22B 4/00, C22C 1/10

(54) **Procédé d'obtention d'un article à base de zircone**
Verfahren zur Herstellung eines Sinterkörpers aus Zirconiumoxyd
Process for obtaining a zirconia-based article

(30) Priorité: 07.12.1994 CH 370694; 24.04.1995 EP 95106092
(43) Date de publication de la demande: 19.06.1996
(73) Titulaire: ASULAB S.A., CH-2501 Bienne (CH)
(72) Inventeur: Magnin, Pierre, CH-1052 Mont-sur-Lausanne (CH)
(74) Mandataire: Thérond, Gérard Raymond

(56) Documents cités:
- DE-A- 3 327 103
- GB-A- 2 132 600
- DATABASE WPI Section Ch, Week 8721 Derwent Publications Ltd., London, GB; Class L02, AN 87-146562 & JP-A-62 083 366 ( KYOCERA CORP) , 16 Avril 1987
- PATENT ABSTRACTS OF JAPAN vol. 015 no. 373 (C-0869) ,19 Septembre 1991 & JP-A-03 150263 (JGC CORP) 26 Juin 1991,

## Description

La présente invention concerne un procédé d'obtention d'un article à base de zircone et en particulier d'un tel article ayant un aspect métallique destiné notamment à être utilisé dans des applications décoratives.

Parmi tous les matériaux connus, les métaux sont très largement utilisés à cause de leurs propriétés très intéressantes : grande résistance mécanique, ténacité élevée, conductivité électrique etc. En outre, leur éclat caractéristique est très recherché pour les applications décoratives. Leur dureté est toutefois inférieure à celle des céramiques, ce qui peut conduire à une usure importante dans de nombreuses conditions d'utilisation courante, par exemple lorsque ces matériaux sont utilisés pour réaliser des pièces d'habillage d'horlogerie comme des boîte de montre.

Pour cette raison, on a depuis longtemps cherché à augmenter la dureté des métaux. Les procédés de métallurgie traditionnelle (trempe, durcissement structural) ne permettent pas d'atteindre les très grandes duretés, supérieures à 1000 HV (dureté Vickers) nécessaires pour certaines applications, telles que celles aux outils de coupe ou à des pièces décoratives inrayables.

Pour ces applications, on a cherché à augmenter encore la dureté des métaux par addition de particules très dures, en réalisant des composites biphasés constitués d'une phase métallique enrobant des particules dures, qui occupent fréquemment la majeure partie du volume du matériau. Un certain nombre de matériaux de ce type ont été développés et sont aujourd'hui communément utilisés à l'échelon industriel. On les nomme généralement "métal dur" lorsque les particules dures utilisées sont constituées de carbure de tungstène, et "cermet" lorsqu'elles sont en carbonitrure de titane.

Tous ces matériaux ont toutefois en commun le fait qu'ils comportent une phase métallique distincte, qui peut limiter leur résistance à la corrosion et leurs propriétés mécaniques à haute température.

De plus, cette phase métallique contient toujours du nickel ou du cobalt, toutes les tentatives pour substituer d'autres métaux à ces éléments ayant jusqu'ici échoué. Toutefois, l'utilisation de cette phase métallique avec le nickel et le cobalt, dans des applications qui conduisent à un contact prolongé avec la peau, comme par exemple les applications dans l'horlogerie et la bijouterie, doit être évitée car ces éléments sont connus pour provoquer fréquemment des allergies.

Enfin, ces matériaux sont généralement difficiles à mettre en forme, ce qui constitue une limitation importante lors de la fabrication de pièces d'habillage pour l'horlogerie ou de pièces de bijouterie - de formes souvent complexes - et rend leur coût très élevé.

L'invention a donc pour but de remédier à tous ces inconvénients en fournissant un procédé d'obtention d'un article à base de zircone présentant toutes les propriétés des pièces en céramiques conventionnelles (dureté, facilité de mise en forme, absence d'effet allergène etc.) tout en présentant l'éclat des pièces métalliques.

L'invention a donc pour objet un procédé d'obtention d'un article en zircone fritté fini ou semi-fini ayant un aspect métallique, caractérisé en ce qu'il comprend les étapes consistant à :
- se munir d'au moins un article en zircone préalablement conformé dans sa forme finie ou semi-fini;
- disposer ledit article dans un four dans lequel règne un plasma contenant de l'hydrogène;
- amener ledit article à une température d'environ 800^{o}C ou plus; et
- maintenir ledit article à cette température pendant un temps d'environ un quart d'heure à trois heures et de préférence deux heures.

L'approche pour réaliser de tels article est fondamentalement nouvelle. En effet, on a commencé par réaliser selon la technologie traditionnelle une pièce en céramique conventionnelle présentant toutes les propriétés recherchées, mais sans caractère métallique puis on a soumis cette pièce au procédé selon l'invention afin de lui conférer un aspect métallique.

Les articles obtenus par ce procédé acquièrent certaines propriétés des métaux, notamment leur conductibilité électrique et leur éclat métallique tout en conservant les propriétés des céramiques, en particulier leur dureté.

A la grande différence des "métaux durs" et des "cermets" existants, les article en zircone selon l'invention présentent uniquement certaines caractéristiques des métaux, mais ils ne contiennent pas de phase métallique.

Un exemple de réalisation d'un article en zircone fritté ayant un aspect métallique avec son procédé d'obtention selon l'invention va maintenant être décrit dans ce qui suit.

A titre d'exemple, on se muni d'un article en zircone ayant une configuration cristallographique tétragonale (oxyde de zirconium, ZrO₂) de couleur blanche et qui est réalisé selon les techniques usuelles de fabrication d'articles en céramique, par exemple par frittage.

Cet article peut être un produit fini ayant sa forme finale dans laquelle il va être utilisé, par exemple une pièce de forme générale parallélépipédique destinée à constituer un élément de bracelet de montre.

Bien entendu, le cas échéant l'article peut être un produit semi-fini sur lequel des opérations d'usinage ultérieures peuvent être réalisées afin de l'adapter à son utilisation finale.

Cet article est ensuite chauffé à 800^{o}C et plongé pendant un temps compris entre un quart d'heure et trois heures, et de préférences deux heures, dans un plasma d'hydrogène, obtenu par exemple à l'aide d'une décharge électrique ou d'un générateur de micro-ondes.

Après cette dernière opération, l'article présente un bel aspect et un éclat métallique.

Le procédé selon l'invention permet de réaliser un article cumulant certaines des caractéristiques des céramiques et des métaux, sans qu'aucune phase métallique ne soit présente.

Il est ainsi possible d'obtenir des articles d'une grande dureté présentant un aspect et un éclat métalliques particulièrement esthétiques, faciles à mettre en forme et non susceptibles de provoquer des réactions allergiques. De la sorte, ces articles sont parfaitement adaptés à des utilisations en tant qu'articles décoratifs et en particulier en tant qu'élément de construction de bracelet ou de boîte pour pièce d'horlogerie.

## Revendications

1. Procédé d'obtention d'un article en zircone fritté fini ou semi-fini ayant un aspect métallique, caractérisé en ce qu'il comprend les étapes consistant à :
- se munir d'au moins un article en zircone préalablement conformé dans sa forme finie ou semi-finie;
- disposer ledit article dans un four dans lequel règne un plasma contenant de l'hydrogène;
- amener ledit article à une température de 800^{o}C ou plus; et
- maintenir ledit article à cette température pendant un temps d'un quart d'heure à trois heures et de préférence deux heures.

2. Utilisation d'un article en zircone obtenu selon la revendication 1 en tant qu'article décoratif et en particulier en tant que boîte de montre.

## Claims

1. Method for obtaining a finished or semi-finished item in sintered zirconia having a metallic appearance, characterized in that it comprises steps consisting of :
- providing at least one previously shaped zirconia item in its finished or semi-finished shape;
- placing said item in an oven in which there is a plasma containing hydrogen;
- bringing said item to a temperature of 800°C or more;
- maintaining said item at this temperature for a period of time from a quarter of an hour to three hours and preferably two hours.

2. Use of a zirconia item obtained according to claim 1 as a decorative item and in particular as a watch case.

## Patentansprüche

1. Verfahren zum Herstellen eines fertigen oder halbfertigen Gegenstandes aus gesinterter Zirkonerde mit einem metallischen Aussehen, dadurch gekennzeichnet, daß es die Schritte enthält, die darin bestehen:
- Nehmen eines Gegenstandes aus Zirkonerde, der im voraus in seine fertige oder halbfertige Form gebracht worden ist,
- Anordnen des Gegenstandes in einem Ofen, in dem ein Wasserstoff enthaltendes Plasma herrscht;
- Bringen des Gegenstandes auf eine Temperatur von 800 °C oder höher; und
- Halten des Gegenstandes während einer Zeitdauer von einer Viertelstunde bis zu drei Stunden und vorzugsweise von zwei Stunden auf dieser Temperatur.

2. Verwendung eines Gegenstandes aus Zirkonerde, der gemäß Anspruch 1 erhalten worden ist, als Ziergegenstand und insbesondere als Uhrengehäuse.
